# EUROPEAN PATENT SPECIFICATION

(11) **EP 2 621 716 B1**
(45) Date of publication and mention of the grant of the patent: **14.01.2015**
(21) Application number: 11781854.2
(22) Date of filing: 26.09.2011
(51) Int. Cl.: B29D 30/32

(54) **PROCESS AND APPARATUS FOR MANUFACTURING A TYRE FOR VEHICLE WHEELS**
VERFAHREN UND VORRICHTUNG ZUR HERSTELLUNG EINES REIFENS FÜR FAHRZEUGRÄDER
PROCÉDÉ ET APPAREIL DE FABRICATION DE PNEU POUR ROUES DE VÉHICULE

(30) Priority: 30.09.2010 US 388452 P; 28.09.2010 IT MI20101760
(43) Date of publication of application: 07.08.2013
(73) Proprietor: Pirelli Tyre S.p.A., 20126 Milano (IT)
(72) Inventor: MARCHINI, Maurizio, I-20126 Milano (IT); MANCINI, Gianni, I-20126 Milano (IT)
(74) Representative: Castiglia, Paolo
(86) International application number: PCT/IB2011/002277
(87) International publication number: WO 2012/042359

(56) References cited:
- EP-A1- 0 150 925
- EP-A1- 1 537 986
- EP-A2- 0 394 554
- WO-A1-2006/003058
- WO-A1-2009/063264
- WO-A1-2010/018420
- GB-A- 878 837

## Description

The present invention relates to a process and an apparatus for manufacturing a tyre for vehicle wheels.

A tyre for vehicle wheels generally comprises a carcass structure comprising at least one carcass ply formed of reinforcing cords embedded in an elastomeric matrix. The carcass ply has end edges respectively engaged with annular anchoring structures. The latter are arranged in the areas of the tyre usually identified by the name "beads" and each of them is normally formed by a substantially circumferential annular insert on which at least one filling insert is applied, in a radially outer position thereof. Such annular inserts are commonly identified as "bead cores" and have the task of keeping the tyre firmly fixed to the anchoring seat specifically provided in the rim of the wheel, thus preventing, in operation, the radially inner end edge of the tyre coming out from such a seat.

At the beads specific reinforcing structures may be provided having the function of improving the torque transmission to the tyre.

In a radially outer position with respect to the carcass ply a belt structure comprising one or more belt layers is associated, said belt layer being arranged radially one on top of the other and having textile or metallic reinforcing cords with crossed orientation and/or an orientation substantially parallel to the direction of circumferential extension of the tyre.

Between the carcass structure and the belt structure a layer of elastomeric material, known as "under-belt", can be provided, said layer having the function of making the radially outer surface of the carcass structure as uniform as possible for the subsequent application of the belt structure.

In a radially outer position with respect to the belt structure a tread band is applied, also made of elastomeric material.

Between the tread band and the belt structure a so-called "under-layer" of elastomeric material can be arranged, said under-layer having properties suitable for ensuring a steady union of the tread band itself.

On the side surfaces of the carcass structure respective sidewalls of elastomeric material are also applied, each extending from one of the side edges of the tread band up to the respective annular anchoring structure to the beads.

Throughout the present description and in the subsequent claims, the terms "radial" and "axial" and the expressions "radially inner/outer" and "axially inner/outer" are used with reference to the radial direction and to the axial direction of a forming support. The terms "circumferential" and "circumferentially" instead, are used referring to the annular extension of the forming support.

Throughout the present description and in the subsequent claims, the pressure values here indicated are to be understood as values which refer to the atmospheric pressure.

With particular reference to the area of the tyre identified as "bead", this is defined by a free end portion of the carcass ply specifically turned up and housing the annular anchoring structure therein.

GB 878, 837 discloses a flange pushing a bead core against a fabric on a tire building drum while air is momentary introduced into a stitcher for the purpose of ensuring the adhesion of the fabric to the radially inner face of the bead core, so that when the turn-up of the fabric is made there will be no tendency for the fabric to crawl back and have a loose fit around the bead core itself. Then the flange is removed to permit expansion of the stitcher upwardly along the out axially facing radial surface of the bead core.

EP 1 537,986 discloses a tire manufacturing method and equipment wherein a bead core is press-contacted with a side surface of a carcass by a bead holding arm. In a next step, a bladder is inflated and the bead holding arm is withdrawn from the bead core. Due to the inflation of the bladder, the carcass is turned up outwardly in a radial direction and the bead core is held by the bladder from inside the bead core. Then the bladder is further inflated and the inflated bladder is pressed toward the bead core by a pressure plate.

The Applicant verified that the coupling between the bead core and the carcass ply generally comprises a step, prior to the step of turning up the free end portion of the carcass ply, wherein the filling insert of the bead core is brought in a contact position with the end edge of the carcass ply by a proper positioning device and a step, simultaneous to the step of turning up the free end portion of the carcass ply, wherein the filling insert of the bead core is laid or pulled down onto the end edge of the carcass ply.

The Applicant focused his attention on those conventional processes wherein the turning up of the free end portion of the carcass ply, and the simultaneous pulling down of the filling insert of the bead core on the end edge of the carcass ply, is carried out as a result of the inflation, up to a predetermined pressure value, of an air chamber specifically provided close to the forming support on which the carcass ply is arranged.

The Applicant observed that in the processes described above, keeping the bead core into position on the end edge of the carcass ply during the turning up of the free end portion of the carcass ply is obtained by only the stickiness of the rubber mixture of the bead core with the rubber mixture of the fabric the carcass ply is made of.

The Applicant noted that such stickiness is not always sufficient to ensure that the desired concentricity between bead core and forming support is maintained. In fact, during the turning up of the free end portion of the carcass ply the bead core is subject to considerable stresses in the radial direction.

The Applicant thus observed that, in order to maintain the desired concentricity between bead core and forming support during the turning up of the free end portion of the carcass ply, it is desirable to achieve a greater consolidation of the bead core on the end edge of the carcass ply during the turning up of the free end portion of the carcass ply.

The Applicant observed, on the other end, that in order to carry out the turning up of the free end portion of the carcass ply, and the simultaneous pulling down of the filling insert of the bead core on the end edge of the carcass ply, by the air chamber the action of the air chamber must not be impaired by the presence of bead core positioning and/or retaining devices.

However, the Applicant observed that in the turning up of the free end portion of the carcass ply, the first part of this operation is particularly critical; in fact, during the first part of the turning up, the bead core is subject to stresses in radial direction, which tend to move it from the desired position with respect to the forming support.

The Applicant thus observed that in order to keep the desired concentricity between bead core and forming support a greater consolidation of the bead core on the end edge of the carcass ply during the first part of the turning up of the free end portion of the carcass ply is required.

In this respect, the Applicant perceived that it is possible to increase the anchoring surface between bead core and carcass ply, thus achieving the desired greater consolidation of the bead core on the carcass ply, by starting the turning up of the free end portion of the end edge of the carcass ply while the bead core is still retained into contact with the end edge of the carcass ply against the forming support through a proper positioning device.

More particularly, the Applicant observed that carrying out the inflation of the air chamber in at least two successive time periods allows starting the turning up while the bead core is still kept in contact with the end edge of the carcass ply.

Finally, the Applicant found that carrying out a partial inflation of the air chamber while the positioning device retains the bead core in contact position with the end edge of the carcass ply allows obtaining a first part of the turning up in a condition wherein the bead core is in the desired position with respect to the forming support and the stresses imparted to the bead core during such first part of turning up are effectively opposed. An anchoring is thus obtained between bead core and end edge of the carcass ply which is sufficient to avoid that in the remaining part of the turning up, when the bead core is subject to greater stresses and is retained into position on the carcass ply by only the stickiness of the rubber mixture of the bead core with the rubber mixture of the fabric the carcass ply is made of, the bead core might move from the desired position with respect to the forming support. The desired concentricity between bead core and forming support is thus ensured.

The present invention therefore relates, in a first aspect thereof, to a process for manufacturing a tyre for vehicle wheels, as recited in claim 1.

The Applicant verified that the present invention allows manufacturing high quality tyres, wherein the position of the bead cores with respect to the forming support is the one desired and defined in the design stage, such position not being altered by the effect of the stresses the bead core is subject to during the turning up of the free end portion of the carcass ply.

According to the invention, the substantial irremovability of the bead core during the turning up of the end edge of the carcass ply is in fact assured either by the fact that a first part of the turning up is carried out while the bead core is retained into contact position with the end edge of the carcass ply by a proper positioning device, and by the fact that the remaining part of the turning up is carried out when, a part of the turning up having been already carried out, the bead core adheres by stickiness onto the end edge of the carcass ply at an extended surface. Carrying out a part of the turning up in a condition wherein the bead core is held in contact position with the end edge of the carcass ply is advantageously made possible by the fact that a partial inflation of the air chamber has been performed.

In a second aspect thereof, the present invention relates to an apparatus for manufacturing a tyre for vehicle wheels, as recited in claim 8.

Advantageously, such an apparatus allows carrying out the process of the present invention discussed above, thus allowing the advantages mentioned above to be achieved.

The present invention, in at least one of the aforementioned aspects, can comprise at least one of the following preferred features.

Preferably, the annular anchoring structure is brought in contact position with the end edge of the carcass ply by the above device for positioning the annular anchoring structure. Advantageously, therefore, retaining the annular anchoring structure in contact position on the end edge of the carcass ply is carried out by the same mechanical member that carries out the positioning of the annular anchoring structure on the aforementioned end edge. Important advantages are thus achieved in terms of construction simplicity of the apparatus that carries out the above process, with a consequent considerable reduction of the production costs.

During the partial inflation of said at least one air chamber, a maximum pressure value of between about 0.1 bar and about 0.4 bar is reached. More preferably, said maximum pressure value is of between about 0.2 bar and about 0.3 bar.

Said at least one air chamber, when it is completely inflated, has a maximum pressure value of between about 0.5 bar and about 1 bar. More preferably, said maximum pressure value is of between about 0.6 bar and about 0.9 bar.

In preferred embodiments thereof, the present invention comprises, before said annular anchoring structure is brought into contact position with the end edge of the carcass ply, displacing said at least one air chamber close to said forming support.

Preferably, the present invention comprises, after completing the inflation of said at least one air chamber, deforming said at least one air chamber to exert a thrust against the end edge of the carcass ply. In this way it is possible to achieve an optimal lying of the turned up end edge on the annular anchoring structure and an advantageous compaction of the bead thus formed, to the advantage of the quality of the tyre obtained and, consequently, the performance thereof.

In particularly preferred embodiments of the present invention, holding the annular anchoring structure in contact position with the end edge of the carcass ply is carried out through a radially outer annular portion of said at least one positioning device and comprises simultaneously moving a radially inner annular portion of said at least one positioning device away from the forming support.

In particular, according to the present invention, when the bead core is moved in contact position with the end edge of the carcass ply, the radially inner annular portion of the positioning device supports the bead core at the inner radial surface of the bead core and pushes it towards the end edge of the carcass ply by acting on the axially outer surface of the bead core together with the radially outer annular portion of the positioning device. The radially outer annular portion of the positioning device then continues to act on the axially outer surface of the bead core to hold it into contact position with the end edge of the carcass ply, while the radially inner annular portion of the positioning device is moved away from the bead core to leave the radially inner surface of the annular anchoring structure free. It is thus possible to carry out the first part of the turning up of the end edge of the carcass ply around the annular anchoring structure.

Preferably, the present invention further comprises, before carrying out the remaining part of turning up the end edge of the carcass ply, moving said radially outer annular portion of said at least one positioning device away from the forming support. It is thus possible to complete the turning up of the end edge of the carcass ply around the annular anchoring structure.

The Applicant noted that when the bead core is not supported by the positioning device anymore, it is firmly anchored by stickiness to the carcass ply at both the side surface thereof facing the forming support and the radially inner surface thereof. Such anchoring is sufficient for preventing undesired movements of the bead core during the remaining part of the turning up. This thanks to the fact that in this part of the turning up the bead core is no longer subject to the same outwards stresses in radial direction whereto it is instead subject in the first part of the turning up. Finally, it is possible in this way to ensure the proper positioning of the bead core in the tyre, to the advantage of quality and performance of the latter.

In preferred embodiments thereof, the present invention further comprises, before bringing the annular anchoring structure in contact position with the end edge of the carcass ply, pulling the end edge of the carcass ply down towards the rotation axis of the forming support through at least one ply pulling down device.

Preferably, such pulling down is carried out by the ply pulling down device as a result of the movement of the positioning device of the annular anchoring structure towards the forming support along a direction parallel to the rotation axis of the forming support. Clear advantages are thus achieved in terms of construction simplicity of the apparatus that carries out the above process, with a consequent considerable reduction of the production costs.

In the embodiments of the present invention in which said at least one ply pulling down device is used, preferably, before starting the turning up of the end edge around the annular anchoring structure said at least one ply pulling down device is moved away from the forming support.

In particularly preferred embodiments of the present invention, the annular anchoring structure comprises a substantially circumferential annular insert and a filling insert associated in a radially outer position with respect to the substantially circumferential annular insert.

In this case, preferably, before starting the turning up of the end edge of the carcass ply, the filling insert is pulled down on the carcass ply by pushing it against the forming support. This allows obtaining a good anchoring of the annular anchoring structure on the end edge of the carcass ply. Such anchoring is ensured by the stickiness with the rubber mixture of the carcass ply by both the rubber mixture of the substantially circumferential annular insert of the annular anchoring structure and the rubber mixture of the pulled down filling insert.

In the preferred embodiments of the present invention, said at least one air chamber is movable along a direction parallel to the rotation axis of the forming support in a radially inner position with respect to said at least one positioning device.

Preferably, said at least one positioning device is movable along a direction parallel to the rotation axis of the forming support.

In particularly preferred embodiments of the present invention, said at least one positioning device comprises a radially inner annular portion and a radially outer annular portion capable of sliding with respect to one another along said direction parallel to the rotation axis of the forming support.

Preferably, at least one pulling down device is further provided for pulling down the end edge of the carcass ply towards the rotation axis of the forming support.

Preferably, at least one thrusting device is further provided for thrusting said at least one air chamber against the end edge of the carcass ply.

Preferably, in the embodiments of the present invention in which said annular anchoring structure comprises a substantially circumferential annular insert and a filling insert associated in a radially outer position with respect to the substantially circumferential annular insert, at least one pulling down device is provided for pulling down the filling insert on the end edge of the carcass ply. Such pulling down device is preferably slidingly associated with the device for positioning the annular anchoring structure.

Preferably, the pulling down of the filling insert is carried out while the positioning device of the annular anchoring structure retains the substantially circumferential annular insert in contact position with the end edge of the carcass ply. Advantageously, the undesired movement of the bead core with respect to the forming support is in this way prevented also during the pulling down of the filling insert, with consequent advantages in terms of quality and performance of the tyre to be obtained.

Further features and advantages of the present invention will appear more clearly from the following detailed description of some preferred embodiments of an apparatus and process according to the present invention, made with reference to the attached drawings. In such drawings:
- figure 1 is a schematic view in longitudinal section and partially broken of a portion of an apparatus for manufacturing a tyre for vehicle wheels according to the present invention, such apparatus being in an operating configuration;
- figure 2 is a view corresponding to that of figure 1, wherein the apparatus portion of figure 1 is shown in a different operating configuration;
- figure 3 is a view corresponding to that of figure 1, wherein the apparatus portion of figure 1 is shown in a further operating configuration;
- figure 4 is a view corresponding to that of figure 1, wherein the apparatus portion of figure 1 is shown in another operating configuration;
- figure 5 is a view corresponding to that of figure 1, wherein the apparatus portion of figure 1 is shown in a different operating configuration;
- figure 6 is a view corresponding to that of figure 1, wherein the apparatus portion of figure 1 is shown in yet a different operating configuration.

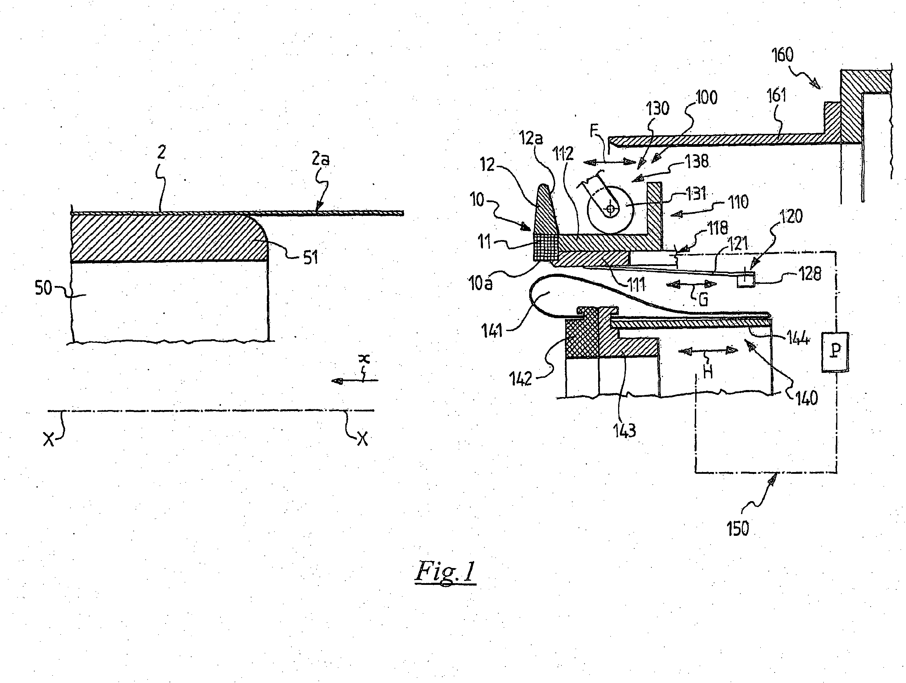

In figure 1, reference numeral 100 globally indicates a portion of an exemplary embodiment of an apparatus usable in a process for manufacturing a tyre for vehicle wheels, according to a preferred embodiment of the present invention.

In particular, apparatus 100 is used in the manufacturing a carcass structure of the tyre for arranging one or more annular anchoring structures 10 at that region of the carcass structure that will make the tyre bead. Such annular anchoring structures 10 are intended for keeping the tyre well fixed to the anchoring seat specifically provided in the rim of the vehicle wheel.

The manufacturing of the carcass structure of the tyre comprises, at first, laying at least one carcass ply 2 on a substantially cylindrical forming support 50 so that the opposite end edges 2a of the carcass ply project cantilevered from the forming support 50. Subsequently, each annular anchoring structure 10 is associated with each of the opposite end edges 2a of the carcass ply 2.

While this is not shown, in the embodiment illustrated in the attached figures each annular anchoring structure 10 is associated with each end edge 2a of the carcass ply 2 at a respective side shoulder 51 of the forming support 50.

For simplicity of description, the description of apparatus 100 and of the process carried out thereby shall be made hereinafter with reference to only one of the opposite end edges 2a of the carcass ply 2 and to one of the side shoulders 51 of the forming support 50 (thus, referring to only one of the opposite tyre beads). In fact, apparatus 100 is symmetrical in the axial direction and the description made with reference to one of the end edges 2a and to one of the sides 51 of the forming support 50 also applies with reference to the axially opposite end edge and to the axially opposite side of the forming support 50.

The forming support 50 is rotatably mounted about a rotation axis X-X in a totally conventional manner. The structure of the forming support 50 is not described in detail herein since it can be made in any convenient manner by a man skilled in the art. Likewise, the members for supporting and moving the forming support 50 shall not be described as they are totally conventional.

As illustrated in the annexed figures, the annular reinforcing structure 10 comprises at least one substantially circumferential annular insert 11, or bead core, on which at least one filling insert 12 is applied in a radially outer position thereof.

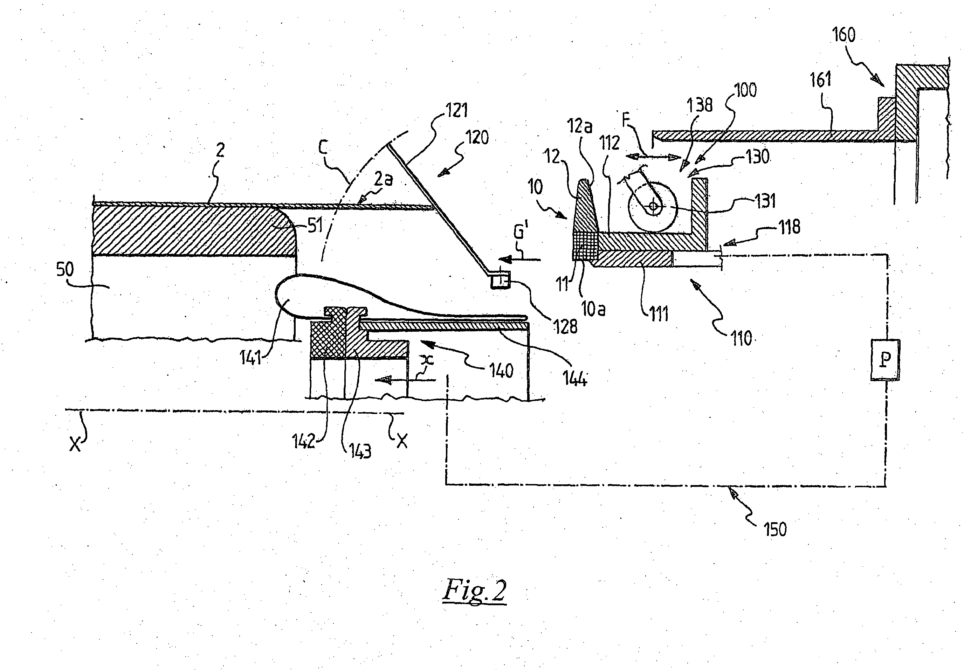

Apparatus 100 comprises a device 110 slidable along a direction x parallel to the rotation axis X-X of the forming support 50, and thus in the two opposite ways of the direction indicated in figures 1 and 2 by arrow F, between a distal position with respect to the forming support 50 and a position proximal to the forming support 50, so as to move close to, or away from, the forming support 50.

As illustrated in figures 1-3, device 110 is intended for supporting the annular anchoring structure 10 and bringing it in contact with the end edge 2a of the carcass ply 2. In particular, device 110 acts on the substantially circumferential annular insert 11 of the annular anchoring structure 10 by supporting and pushing it against shoulder 51 of the forming support 50.

The annular anchoring structure 10 is thus positioned at the desired position on the end edge 2a of the carcass ply 2 by the device 110. Throughout the present description, device 110 shall also be defined as "bead core holding device".

Device 110 comprises a device 118 for positioning the bead core, the device 118 being extended in a circumferential direction and coaxially to axis X-X of the forming support 50. Such positioning device 118 comprises a radially inner portion 111 for supporting/thrusting the annular anchoring structure 10 and a radially outer portion 112 for thrusting/retaining the annular anchoring structure 10.

As better described hereinafter, the radially inner portion 111 and the radially outer portion 112 of each positioning device 118 are slidable with respect to each other along the direction x parallel to the rotation axis X-X of the forming support 50.

Apparatus 100 further comprises a device 120 for pulling down the end edge 2a of the carcass ply 2 towards axis X-X of the forming support 50. Such pulling down is required, in the embodiment shown in the attached drawings, for allowing the bead core holding device 110 to approach the forming support 50 in order to position the annular anchoring structure 10 at the desired position on the end edge 2a of the carcass ply 2. Throughout the present description, device 120 shall also be defined as "ply pulling down device".

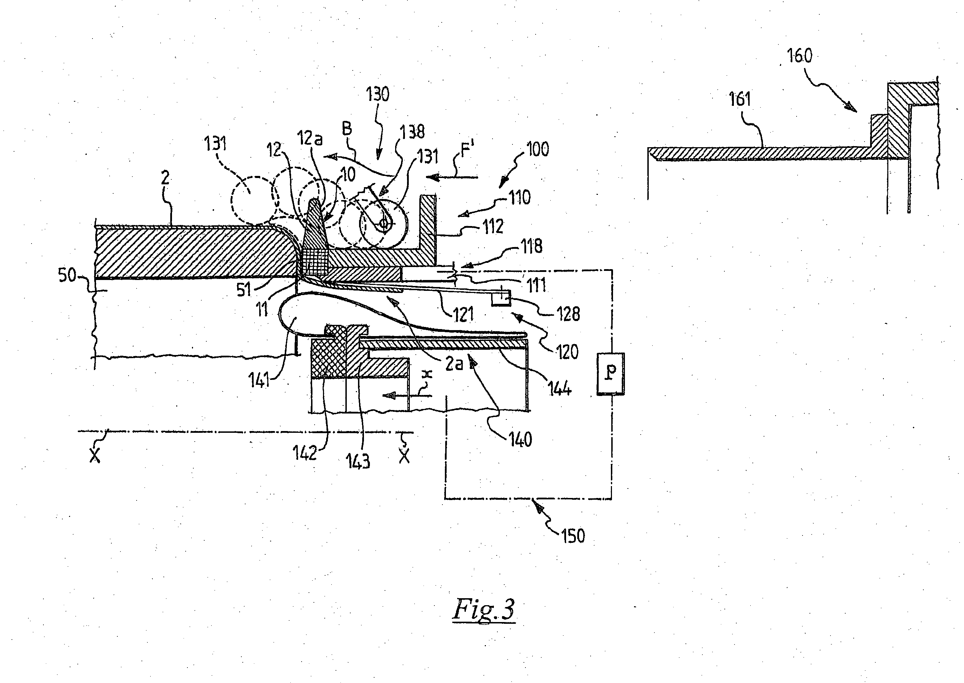

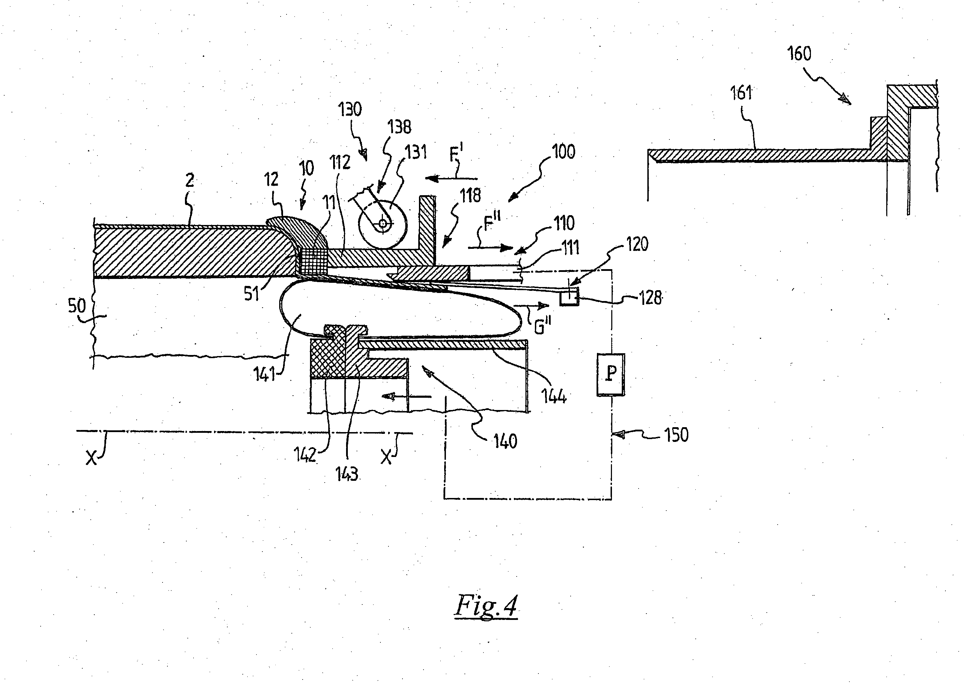

As shown in figures 1-4, device 120 is slidable parallel to axis X-X with respect to the bead core holding device 110 in the two opposite ways of the direction indicated by arrow G in figure 1. Sliding of device 120 takes place between a non operating axial position, shown in figure 1, and an operating axial position, shown in figures 2 and 3 (figures 4-6 show the device 120 after it has gone back to the non operating axial position thereof).

Device 120 comprises a plurality of ply pulling down members 128 (only one of which is shown in the attached figures) arranged adjacent to each other in the circumferential direction and coaxially to axis X-X of the forming support 50.

Each ply pulling down member 128 comprises a plurality of blades 121 (only one of which is illustrated in the attached figures), partially overlapping in the circumferential direction. In particular, the blade of a ply pulling down member is partially, overlapped to the adjacent blade of the same member and the circumferentially outer blades of two circumferentially consecutive ply pulling down member 128 are arranged so as to be also partially overlapped in the circumferential direction.

Blades 121 are preferably made of elastically bending material and are shaped so that, at rest, they take on as a whole an open corolla-like configuration, that is a configuration expanded in radial direction. Figure 2 shows one of such blades 121 in the radially expanded configuration thereof. The shape and the position of blades 121 is such that they remain partially overlapped in the circumferential direction when they are in the radially expanded configuration thereof.

When stressed in radial direction, blades 121 on the other hand may take on, as a whole, a closed or radially contracted configuration. Figures 1, 3-6 show one of such blades 121 in the radially contracted configuration thereof.

During sliding of the ply pulling down device 120 with respect to the bead core holding device 110, blades 121 are thrust by the ply pulling down device 120 towards a radially inner position with respect to the positioning devices 118 (figures 2 and 3). In the passage from the radially expanded configuration to the radially contracted configuration, blades 121 bend according to the curved broken line indicated with C in figure 2.

In the embodiment illustrated in the annexed figures, blades 121 are held in their radially contracted configuration by the thrust exerted in the radial direction by the positioning devices 118 of the bead core holding device 110, and more in particular by the radially inner portion 111 of such device 110 (figures 1, 3-6). Blades 121 on the other hand, take on the radially expanded configuration when the blade holding device is axially moved with respect to the bead core holding device 110 (figure 2) along the direction x and so that the latter is not radially overlapped to blades 121.

In the particular embodiment shown here, apparatus 100 further comprises a device 130 for pulling down the filling insert 12 on the carcass ply 2.

Device 130 comprises a plurality of filling insert pulling down members 138 (only one of which is shown in the attached figures) each provided with a respective roller 131. Roller 131 slides on a radially outer surface of the radially outer portion 112 of each positioning device 118.

Rollers 131 are arranged side by side in the circumferential direction coaxially with respect to the axis X-X of the forming support 50.

Each roller 131 is elastically associated with the respective positioning device 118, as described for example in WO 2009/063264 to the same Applicant.

As shown in figure 3, the pulling down of the filling insert 12 on the end edge 2a of the carcass ply 2 takes place as a result of the rolling of rollers 131 on the radially outer surface of the radially outer annular portion 112 of the respective positioning device 118 and on the side surface 12a of the filling insert 12 of the annular anchoring structure 10, starting from a radially inner annular portion of such side surface 12a to continue on a radially outermost portion of the side surface 12a with respect to the aforementioned radially inner annular portion (arrow B in figure 3).

Preferably, as shown in figures 3, rollers 131 act on the filling insert 12 of the annular anchoring structure 10 while the bead core holding device 110 pushes the substantially circumferential annular insert 11 of the annular anchoring structure 10 against shoulder 51 of the forming support 50.

Alternative embodiments are provided for apparatus 100 of the present invention, wherein device 130 for pulling down the filling insert 12 is defined by a continuous ring which is axially slidable with respect to the bead core holding device 110 and having a side profile with a shape matching that of the annular anchoring structure 10 when filling insert 12 is pulled down, as described for example in the aforementioned document WO 2009/063264.

As better described hereinafter, alternative embodiments of apparatus 100 of the present invention are also provided wherein no positioning device is used at all for pulling down the filling insert 12 on the carcass ply 2.

Apparatus 100 further comprises a device 140 suitable for turning up the end edge 2a of the carcass ply 2 about the annular anchoring structure 10 in order to form a turned up end portion of the carcass ply 2 having the annular anchoring structure 10 therein. Throughout the present description, device 140 shall also be defined as "turning up device".

Device 140 is slidable parallel to axis X-X with respect to the bead core holding device 110 and to the ply pulling down device 120 in the two opposite ways of the direction indicated by arrow H in figure 1.

Device 140 is arranged in a radially inner position with respect to the device 120 for pulling down the end edge 2a of the carcass ply 2.

As shown in the annexed figures, device 140 comprises an air chamber 141 whose free ends are associated respectively with two axially adjacent annular elements 142, 143. Such air chamber 141 is intended to be inflated in two successive time periods to achieve the turning up of the end edge 2a of the carcass ply 2, according to the following description.

A further annular element 144 is provided in a axially outer position with respect to the two annular elements 142, 143 for supporting the air chamber 141 at the bottom when it is inflated (figures 1-3) or partially inflated (figure 4).

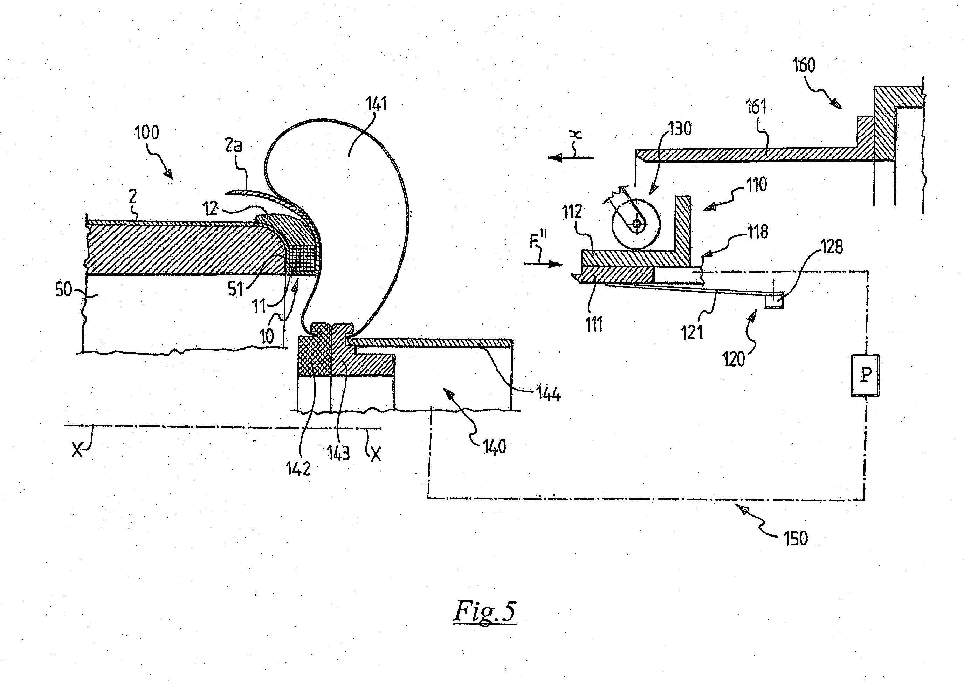

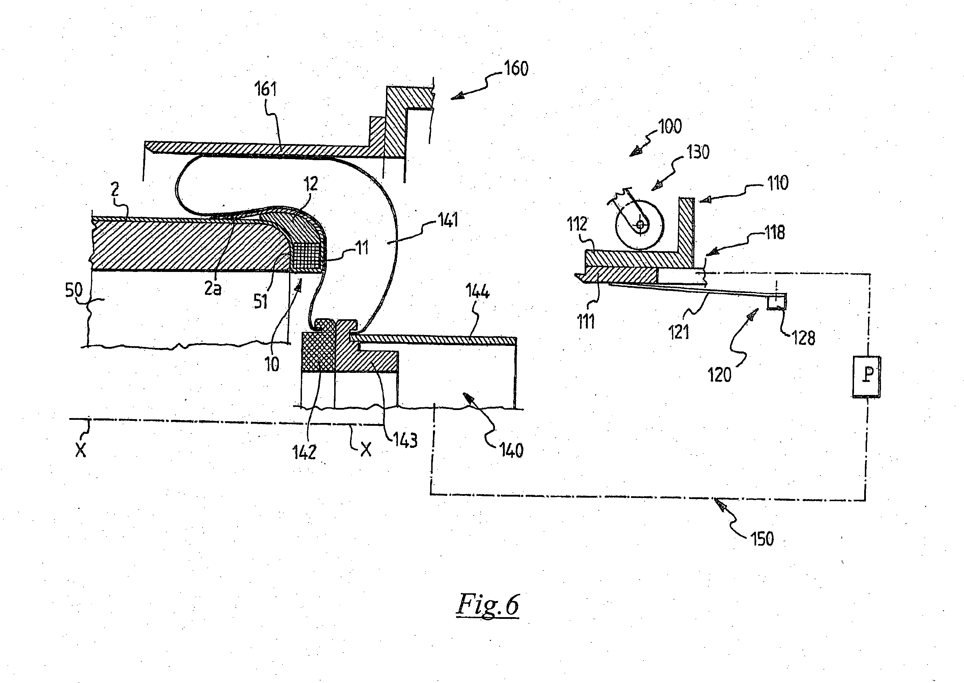

As schematically illustrated in the attached figures, apparatus 100 further comprises a control circuit 150 controlled by a microprocessor P. Such control circuit 150 acts on the positioning device 118 and on the turning up device 140 for defining a first operating configuration, wherein the air chamber 141 is in a partially inflated configuration and the positioning device 118 (in particular, the radially outer portion of such device) retains the annular anchoring structure 10 in a proximal contact position with the end edge 2a of the carcass ply 2 (figure 4), and a second operating configuration, wherein the air chamber 141 is in a completely inflated configuration and the positioning device 118 (in particular, the radially outer portion 112 of such device) is in a distal position with respect to the end edge 2a of the carcass ply 2 (figures 5 and 6).

According to the present invention, when the air chamber 141 is in the partially inflated configuration, a maximum pressure value of between about 0.1 bar and about 0.4 bar, preferably equal to about 0.2 bar, is reached therein. On the other hand, when the air chamber 141 is in the completely inflated configuration, a maximum pressure value of between about 0.5 bar and about 1 bar, preferably comprised between about 0.6 bar and about 0.9 bar, is reached therein.

Apparatus 100 of the present invention further comprises a device 160 for thrusting the air chamber 141 against the end edge 2a of the carcass ply 2.

Such device 160 comprises an annular element 161 slidable parallel to axis X-X (direction x) between a rest position wherein it is in a distal position with respect to the air chamber 141 (figure 5) and an operating position wherein the annular element 161 acts on the air chamber 141, when it is in the completely inflated configuration, so as to deform it and consequently push the end edge 2a of the carcass ply 2 against the annular anchoring structure 10 (figure 6).

As mentioned above, in alternative embodiments of apparatus 100 (not shown), the device 130 for pulling down the filling insert 12 is not provided. In this case, the pulling down of the filling insert 12 on the carcass ply 2 takes place after the complete inflation of the air chamber 141 as a result of the action exerted on the inflated air chamber 141 by the annular element 161 of the thrusting device 160. In other words, the pulling down of the filling insert 12 on the carcass ply 2 takes place simultaneously with the deformation of the inflated air chamber 141 caused by the annular element 161 of the thrusting device 160.

A preferred embodiment of a process for manufacturing a tyre in accordance with the present invention shall now be described, wherein such process can be carried out through apparatus 100 described above. In particular, the part relating to the manufacture of the carcass structure of the tyre shall be described.

At first, as illustrated in figure 1, the carcass ply 2 is laid on the forming support 50 so that an end edge 2a thereof projects cantilevered from the forming support 50. The bead core holding device 110, the device 130 for pulling down the filling insert 12 (if provided), the ply pulling down device 120, the turning up device 140 and the thrusting device 160 are at a distal position with respect to the forming support 50. In this operating configuration, the bead core holding device 110 (and particularly, the radially inner portion 111 of each positioning device 118) supports the annular anchoring structure 10 at a radially inner surface of the latter.

Subsequently, as shown in figure 2, the turning up device 140 and the ply pulling down device 120 are axially moved towards the forming support 50 (arrow G'). This movement causes the corolla-like opening of blades 121.

Subsequently (figure 3), the bead core holding device 110 is axially moved towards the forming support 50 too (arrow F'), so as to bring the annular anchoring structure 10 close to the forming support 50. In particular, the bead core holding device 110 acts, through the positioning devices 118, pushing on an axially outer side surface of the substantially circumferential annular insert 11 of the annular anchoring structure 10.

The axial movement of the bead core holding device 110 causes the movement of blades 121 along the curved broken line indicated with C in figure 2. Blades 121 are thus closed and, as a result of such closure, the movement of the end edge 2a of the carcass ply towards axis X-X of the forming support 50 is achieved. The annular anchoring structure 10 can thus be brought in contact with the end edge 2a of the carcass ply 2 at the side shoulder 51 of the forming support 50.

Subsequently, as shown in figure 3, while the bead core holding device 110 pushes the substantially circumferential annular insert 11 in order to hold it into position against the side shoulder 51 of the forming support 50 (arrow F'), rollers 131 of device 130 are moved for obtaining the pulling down of the filling insert 12 on.the carcass ply 2 (arrow B).

In particular, such pulling down takes place, at first, by exerting a predetermined thrust on a radially inner annular portion of the side surface 12a of the filling insert 12 and then, by axially moving rollers 131 towards the forming support 50, thus exerting such thrust on a progressively greater portion of the side surface 12a of the filling insert 12 starting from the aforementioned radially inner annular portion along all the radial extension of the side surface 12a.

Subsequently, as illustrated in figure 4, while the radially outer annular portion 112 of each positioning device 118 of the bead core holding device 110 continues to push on the substantially circumferential annular insert 11 for retaining the annular anchoring structure 10 in position against the side shoulder 51 of the forming support 50 (arrow F'), the radially inner annular portion 111 of each positioning device 118 of the bead core holding device 110 and the ply pulling down device 120 are axially moved away from the forming support 50 (arrow F" and G"). The ply pulling down device 120 thus releases the radially inner surface 10a of the annular anchoring structure, exposing such surface to the end edge 2a of the carcass ply 2.

At this point, while always keeping the radially outer annular portion 112 of each positioning device 118 of the bead core holding device 110 pushed on the substantially circumferential annular insert 11 against the side shoulder 51 of the forming support 50 (arrow F'), the air chamber 141 is partially inflated up to a predetermined maximum pressure value, comprised between about 0.1 bar and about 0.4 bar, so as to carry out a first part of the turning up of the end edge 2a of the carcass ply 2 around the annular anchoring structure 10.

Subsequently, as shown in figure 5, also the radially outer annular portion 112 of each positioning device 118 of the bead core holding device 110 is axially moved away from the forming support 50 (arrow F"). At this point it is possible to completely inflate the air chamber 141 up to a new predetermined maximum pressure value, comprised between about 0.5 bar and about 1 bar, so as to complete the turning up of the end edge 2a of the carcass ply 2 around the annular anchoring structure 10.

After the complete inflation of the air chamber is carried out, the thrusting device 160 is axially moved until it is brought close to the forming support 50. In such position, the annular element 161 comes into contact with the air chamber 141 and, deforming the latter, it causes a thrust action of the air chamber 141 against the end edge 2a of the carcass ply 2 previously turned up on the annular anchoring structure 10 (figure 6). In this way, the optimal lying of the turned up end edge 2a on the annular anchoring structure 10 and the compaction of the bead thus formed are obtained.

In the embodiment of the present invention in which no specific device (such as for example device 130 described above) is used for achieving the pulling down of the filling insert 12 on the carcass ply 2 before starting the turning up of the end edge 2a of the carcass ply 2 around the annular anchoring structure, the pulling down of the filling insert 12 on the carcass ply 2 takes place simultaneously with the above-described deformation of the inflated air chamber 141 by the action of the annular element 161 of the thrusting device 160.

Of course a man skilled in the art can make further modifications and changes to the invention described above in order to meet specific and contingent application requirements, modifications and changes which fall in any case within the scope of protection as defined by the following claims.

## Claims

1. Process for manufacturing a tyre for vehicle wheels, comprising:
- laying at least one carcass ply (2) on a forming support (50) having a rotation axis (X-X);
- bringing an annular anchoring structure (10) in contact position with an end edge (2a) of the carcass ply (2);
- holding, through at least one positioning device (118), the annular anchoring structure (10) in contact position with the end edge (2a) of the carcass ply (2) while at least one air chamber (141) is partially inflated to carry out a first part of turning up the end edge (2a) of the carcass ply (2) around the annular anchoring structure (10);
- moving said at least one positioning device (118) away from said annular anchoring structure (10);
- completing the inflation of said at least one air chamber (141) to carry out the remaining part of turning up the end edge (2a) of the carcass ply (2) around the annular anchoring structure (10), so as to form a turned up end portion of the carcass ply (2) including the annular anchoring structure
wherein during the partial inflation of said at least one air chamber (141) a maximum pressure value of between 0.1 bar and 0.4 bar is reached into said at least one air chamber (141) and when said at least one air chamber (141) is completely inflated a maximum pressure value of between 0.5 bar and 1 bar is reached into said at least one air chamber (141).

2. Process according to claim 1, comprising, before said annular anchoring structure (10) is brought into contact position with the end edge (2a) of the carcass ply (2), displacing said at least one air chamber (141) close to said forming support (50).

3. Process according to any one of the previous claims, comprising, after completing the inflation of said at least one air chamber (141), deforming said at least one air chamber (141) to exert a thrust against the end edge (2a) of the carcass ply (2).

4. Process according to any one of the previous claims, wherein holding the annular anchoring structure (10) in contact position with the end edge (2a) of the carcass ply (2) is carried out through a radially outer annular portion (112) of said at least one positioning device (118) and comprises simultaneously moving a radially inner annular portion (111) of said at least one positioning device (118) away from the forming support (50).

5. Process according to claim 4, further comprising, before carrying out the remaining part of turning up the end edge (2a) of the carcass ply (2), moving said radially outer annular portion (112) of said at least one positioning device (118) away from the forming support (50).

6. Process according to any one of the previous claims, further comprising, before bringing the annular anchoring structure (10) in contact position with the end edge (2a) of the carcass ply (2), pulling the end edge (2a) of the carcass ply (2) down towards the rotation axis (X-X) of the forming support (50) through at least one ply pulling down device (120).

7. Process according to claim 6, comprising, before starting to turn up the end edge (2a) around the annular anchoring structure (10), moving said at least one ply pulling down device (120) away from the forming support (50) .

8. Apparatus (100) for manufacturing a tyre for vehicle wheels, the apparatus (100) comprising:
- at least one forming support (50) having a rotation axis (X-X);
- at least one positioning device (118) for positioning at least one annular anchoring structure (10) on at least one end edge (2a) of at least one carcass ply (2) laid on the forming support (50);
- at least one turning up device (140) for turning up the end edge (2a) of the carcass ply (2) around the annular anchoring structure (10), said at least one turning up device (140) comprising at least one air chamber (141);
- a control circuit acting on said at least one positioning device (118) and said at least one turning up device (140) to define:
- a first operative configuration of the apparatus (100) wherein said at least one air chamber (141) is in a partially inflated configuration and said at least one positioning device (118) holds the annular anchoring structure (10) in a proximal contact position with the end edge (2a) of the carcass ply (2); and
- a second operative configuration of the apparatus (100) wherein said at least one air chamber (141) is in a completely inflated configuration and said at least one positioning device (118) is in a distal position with respect to the end edge (2a) of the carcass ply (2);
- a device for inflating said at least one air chamber (141) up to reach inside said at least one air chamber (141) a maximum pressure value of between 0.1 bar and 0.4 bar at said first operative configuration and a maximum pressure value of between 0.5 bar and 1 bar at said second operative configuration.

9. Apparatus (100) according to claim 8, wherein said at least one air chamber (141) is movable along a direction (x) parallel to the rotation axis (X-X) of the forming support (50) in a radially inner position with respect to said at least one positioning device (118).

10. Apparatus (100) according to claim 8 or 9, wherein said at least one positioning device (118) is movable along a direction (x) parallel to the rotation axis (X-X) of the forming support (50).

11. Apparatus (100) according to claim 10, wherein said at least one positioning device (118) comprises a radially inner annular portion (111) and a radially outer annular portion (112) capable of sliding with respect to one another along said direction (x).

12. Apparatus (100) according to any one of claims 8 to 11, comprising at least one ply pulling down device (120) for pulling the end edge (2a) of the carcass ply (2) down towards the rotation axis (X-X) of the forming support (50).

13. Apparatus (100) according to any one of claims 8 to 12, comprising at least one thrusting device (160) for thrusting said at least one air chamber (141) against the end edge (2a) of the carcass ply (2).

## Patentansprüche

1. Verfahren zur Herstellung eines Reifens für Fahrzeugräder, wobei das Verfahren die folgenden Schritte umfasst:
- Auflegen zumindest einer Karkassenlage (2) auf ein Formungslager (50) mit einer Drehachse (X-X);
- Bringen einer ringförmigen Verankerungsstruktur (10) in eine Kontaktposition mit einer Endkante (2a) der Karkassenlage (2);
- Halten, durch zumindest eine Positionierungseinrichtung (118), der ringförmigen Verankerungsstruktur (10) in Kontaktposition mit der Endkante (2a) der Karkassenlage (2), während zumindest eine Luftkammer (141) zum Teil aufgeblasen wird, um einen ersten Teil des Herumbiegens der Endkante (2a) der Karkassenlage (2) um die ringförmige Verankerungsstruktur (10) auszuführen;
- Wegbewegen der zumindest einen Positionierungseinrichtung (118) von der ringförmigen Verankerungsstruktur (10);
- Abschließen des Aufblasens der zumindest einen Luftkammer (141), um den verbleibenden Teil des Herumbiegens der Endkante (2a) der Karkassenlage (2) um die ringförmige Verankerungsstruktur (10) auszuführen, um so einen herumgebogenen Endabschnitt der Karkassenlage (2), der die ringförmige Verankerungsstruktur (10) umfasst, zu erhalten;
wobei während des teilweisen Aufblasens der zumindest einen Luftkammer (141) ein Maximaldruckwert von zwischen 0,1 bar und 0,4 bar in der zumindest einen Luftkammer (141) erreicht wird, und wenn die zumindest eine Luftkammer (141) vollständig aufgeblasen ist, ein Maximaldruckwert von zwischen 0,5 bar und 1 bar in der zumindest einen Luftkammer (141) erreicht wird.

2. Verfahren nach Anspruch 1, das das Verschieben der einen Luftkammer (141) nahe an das Formungslager (50) umfasst, bevor die ringförmige Verankerungsstruktur (10) in Kontaktposition mit der Endkante (2a) der Karkassenlage (2) gebracht wird.

3. Verfahren nach einem der vorhergehenden Ansprüche, das nach dem Abschluss des Aufblasens der zumindest einen Luftkammer (141) das Verformen der zumindest einen Luftkammer (141) umfasst, um eine Schubkraft gegen die Endkante (2a) der Karkassenlage (2) auszuüben.

4. Verfahren nach einem der vorhergehenden Ansprüche, wobei das Halten der ringförmigen Verankerungsstruktur (10) in Kontaktposition mit der Endkante (2a) der Karkassenlage (2) von einem radial äußeren ringförmigen Abschnitt (112) der zumindest einen Positionierungseinrichtung (118) ausgeführt wird und das gleichzeitige Bewegen eines radial inneren ringförmigen Abschnitts (111) der zumindest einen Positionierungseinrichtung (118) von dem Formungslager (50) weg umfasst.

5. Verfahren nach Anspruch 4, das weiter vor der Ausfühurng des verbleibenden Teils des Herumbiegens der Endkante (2a) der Karkassenlage (2) das Bewegen des radial äußeren ringförmigen Abschnitts (112) der zumindest einen Positionierungseinrichtung (118) von dem Formungslager (50) weg umfasst.

6. Verfahren nach einem der vorhergehenden Ansprüche, das vor dem Bringen der ringförmigen Verankerungsstruktur (10) in Kontaktposition mit der Endkante (2a) der Karkassenlage (2) weiter das Herabziehen der Endkante (2a) der Karkassenlage (2) zur Drehachse (X-X) des Formungslagers (50) hin durch zumindest eine Lagenherabzieheinrichtung (120) umfasst.

7. Verfahren nach Anspruch 6, das vor dem Beginn des Herumbiegens der Endkante (2a) um die ringförmige Verankerungsstruktur (10) das Bewegen der zumindest einen Lagenherabzieheinrichtung (120) von dem Formungslager (50) weg umfasst.

8. Vorrichtung (100) zur Herstellung eines Reifens für Fahrzeugräder, wobei die Vorrichtung (100) umfasst:
- zumindest ein Formungslager (50) mit einer Drehachse (X-X);
- zumindest eine Positionierungseinrichtung (118) zum Positionieren zumindest einer ringförmigen Verankerungsstruktur (10) auf zumindest einer Endkante (2a) zumindest einer auf das Formungslager (50) aufgelegten Karkassenlage (2);
- zumindest eine Einrichtung (140) zum Herumbiegen der Endkante (2a) der Karkassenlage (2) um die ringförmige Verankerungsstruktur (10), wobei die zumindest eine Einrichtung (140) zum Herumbiegen zumindest eine Luftkammer (141) umfasst;
- einen Steuerungskreis, der auf die zumindest eine Positionierungseinrichtung (118) und die zumindest eine Einrichtung (140) zum Herumbiegen wirkt, um Folgendes zu definieren:
- eine erste betriebliche Konfiguration der Vorrichtung (100), in der die zumindest eine Luftkammer (141) sich in einer zum Teil aufgeblasenen Konfiguration befindet und die zumindest eine Positionierungseinrichtung (118) die ringförmige Verankerungsstruktur (10) in einer proximalen Kontaktposition mit der Endkante (2a) der Karkassenlage (2) hält; und
- eine zweite betriebliche Konfiguration der Vorrichtung (100), in der die zumindest eine Luftkammer (141) sich in einer vollständig aufgeblasenen Konfiguration befindet und die zumindest eine Positionierungseinrichtung (118) sich in einer distalen Position in Bezug auf die Endkante (2a) der Karkassenlage (2) befindet;
- eine Einrichtung zum Aufblasen der zumindest einen Luftkammer (141), bis in der zumindest einen Luftkammer (141) ein Maximaldruckwert von zwischen 0,1 bar und 0,4 bar in der ersten betrieblichen Konfiguration und ein Maximaldruckwert von zwischen 0,5 bar und 1 bar in der zweiten betrieblichen Konfiguration erreicht ist.

9. Vorrichtung (100) nach Anspruch 8, wobei die zumindest eine Luftkammer (141) entlang einer Richtung (x) parallel zu der Drehachse (X-X) des Formungslagers (50) in einer radial inneren Position in Bezug auf die zumindest eine Positionierungseinrichtung (118) bewegbar ist.

10. Vorrichtung (100) nach Anspruch 8 oder 9, wobei die zumindest eine Positionierungseinrichtung (118) entlang einer Richtung (x) parallel zu der Drehachse (X-X) des Formungslagers (50) bewegbar ist.

11. Vorrichtung (100) nach Anspruch 10, wobei die zumindest eine Positionierungseinrichtung (118) einen radial inneren ringförmigen Abschnitt (111) und einen radial äußeren ringförmigen Abschnitt (112) umfasst, die relativ zueinander entlang der Richtung (x) gleiten können.

12. Vorrichtung (100) nach einem der Ansprüche 8 bis 11, die zumindest eine Lagenherabzieheinrichtung (120) zum Herabziehen der Endkante (2a) der Karkassenlage (2) zur Drehachse (X-X) des Formungslagers (50) hin umfasst.

13. Vorrichtung (100) nach einem der Ansprüche 8 bis 12, die zumindest eine Schiebeeinrichtung (160) zum Schieben der zumindest einen Luftkammer (141) gegen die Endkante (2a) der Karkassenlage (2) hin umfasst.

## Revendications

1. Procédé de fabrication d'un pneu pour roues de véhicule, comprenant le fait :
- de poser au moins un pli de carcasse (2) sur un support de formation (50) ayant un axe de rotation (X-X) ;
- d'amener une structure d'ancrage annulaire (10) en position de contact avec un bord d'extrémité (2a) du pli de carcasse (2) ;
- de maintenir, par l'intermédiaire d'au moins un dispositif de positionnement (118), la structure d'ancrage annulaire (10) en position de contact avec le bord d'extrémité (2a) du pli de carcasse (2) tandis qu'au moins une chambre à air (141) est partiellement gonflée pour réaliser une première partie de retournement du bord d'extrémité (2a) du pli de carcasse (2) autour de la structure d'ancrage annulaire (10) ;
- de déplacer ledit au moins un dispositif de positionnement (118) loin de ladite structure d'ancrage annulaire (10) ;
- d'achever le gonflage de ladite au moins une chambre à air (141) pour réaliser la partie restante de retournement du bord d'extrémité (2a) du pli de carcasse (2) autour de la structure d'ancrage annulaire (10), de manière à former une partie d'extrémité retournée du pli de carcasse (2) comportant la structure d'ancrage annulaire (10) ;
dans lequel pendant le gonflage partiel de ladite au moins une chambre à air (141), une valeur de pression maximale comprise entre 0,1 bar et 0,4 bar est atteinte dans ladite au moins une chambre à air (141) et lorsque ladite au moins une chambre à air (141) est complètement gonflée une valeur de pression maximale comprise entre 0,5 bar et 1 bar est atteinte dans ladite au moins une chambre à air (141) .

2. Procédé selon la revendication 1, comprenant, avant que ladite structure d'ancrage annulaire (10) n'est amenée en position de contact avec le bord d'extrémité (2a) du pli de carcasse (2), le déplacement de ladite au moins une chambre à air (141) à proximité dudit support de formation (50) .

3. Procédé selon l'une quelconque des revendications précédentes, comprenant, après l'achèvement du gonflage de ladite au moins une chambre à air (141), la déformation de ladite au moins une chambre à air (141) pour exercer une poussée contre le bord d'extrémité (2a) du pli de carcasse (2) .

4. Procédé selon l'une quelconque des revendications précédentes, dans lequel le maintien de la structure d'ancrage annulaire (10) en position de contact avec le bord d'extrémité (2a) du pli de carcasse (2) est réalisé à travers une partie annulaire radialement externe (112) dudit au moins un dispositif de positionnement (118) et comprend simultanément le déplacement d'une partie annulaire radialement interne (111) dudit au moins un dispositif de positionnement (118) loin du support de formation (50).

5. Procédé selon la revendication 4, comprenant en outre, avant la réalisation de la partie restante de retournement du bord d'extrémité (2a) du pli de carcasse (2), le déplacement de ladite partie annulaire radialement externe (112) dudit au moins un dispositif de positionnement (118) loin du support de formation (50).

6. Procédé selon l'une quelconque des revendications précédentes, comprenant en outre, avant d'amener la structure d'ancrage annulaire (10) en position de contact avec le bord d'extrémité (2a) du pli de carcasse (2), l'abaissement du bord d'extrémité (2a) du pli de carcasse (2) vers l'axe de rotation (X-X) du support de formation (50) à travers au moins un dispositif d'abaissement de pli (120) .

7. Procédé selon la revendication 6, comprenant, avant de commencer à retourner le bord d'extrémité (2a) autour de la structure d'ancrage annulaire (10), le déplacement dudit au moins un dispositif d'abaissement de pli (120) loin du support de formation (50).

8. Appareil (100) de fabrication d'un pneu pour roues de véhicule, l'appareil (100) comprenant :
- au moins un support de formation (50) ayant un axe de rotation (X-X) ;
- au moins un dispositif de positionnement (118) pour positionner au moins une structure d'ancrage annulaire (10) sur au moins un bord d'extrémité (2a) d'au moins un pli de carcasse (2) posé sur le support de formation (50) ;
- au moins un dispositif de retournement (140) pour retourner le bord d'extrémité (2a) du pli de carcasse (2) autour de la structure d'ancrage annulaire (10), ledit au moins un dispositif de retournement (140) comprenant au moins une chambre à air (141) ;
- un circuit de commande agissant sur ledit au moins un dispositif de positionnement (118) et ledit au moins un dispositif de retournement (140) pour définir :
- une première configuration fonctionnelle de l'appareil (100) dans laquelle ladite au moins une chambre à air (141) est dans une configuration partiellement gonflée et ledit au moins un dispositif de positionnement (118) maintient la structure d'ancrage annulaire (10) en position de contact proximale avec le bord d'extrémité (2a) du pli de carcasse (2) ; et
- une deuxième configuration fonctionnelle de l'appareil (100) dans laquelle ladite au moins une chambre à air (141) est dans une configuration complètement gonflée et ledit au moins un dispositif de positionnement (118) est dans une position distale par rapport au bord d'extrémité (2a) du pli de carcasse (2) ;
- un dispositif pour gonfler ladite au moins une chambre à air (141) jusqu'à atteindre, à l'intérieur de ladite au moins une chambre à air (141), une valeur de pression maximale comprise entre 0,1 bar et 0,4 bar à ladite première configuration fonctionnelle et une valeur de pression maximale comprise entre 0,5 bar et 1 bar à ladite deuxième configuration fonctionnelle.

9. Appareil (100) selon la revendication 8, dans lequel ladite au moins une chambre à air (141) est mobile le long d'une direction (x) parallèle à l'axe de rotation (X-X) du support de formation (50) dans une position radialement interne par rapport audit au moins un dispositif de positionnement (118).

10. Appareil (100) selon la revendication 8 ou 9, dans lequel ledit au moins un dispositif de positionnement (118) est mobile le long d'une direction (x) parallèle à l'axe de rotation (X-X) du support de formation (50).

11. Appareil (100) selon la revendication 10, dans lequel ledit au moins un dispositif de positionnement (118) comprend une partie annulaire radialement interne (111) et une partie annulaire radialement externe (112) capables de coulisser l'une par rapport à l'autre le long de ladite direction (x)

12. Appareil (100) selon l'une quelconque des revendications 8 à 11, comprenant au moins un dispositif d'abaissement de pli (120) pour abaisser le bord d'extrémité (2a) du pli de carcasse (2) vers l'axe de rotation (X-X) du support de formation (50).

13. Appareil (100) selon l'une quelconque des revendications 8 à 12, comprenant au moins un dispositif de poussée (160) pour pousser ladite au moins une chambre à air (141) contre le bord d'extrémité (2a) du pli de carcasse (2).
